Europäisches Patentamt

European Patent Office

Office européen des brevets

(19)

(11) Veröffentlichungsnummer: **0 200 161**
A2

## (12) EUROPÄISCHE PATENTANMELDUNG

(21) Anmeldenummer: 86105659.6

(22) Anmeldetag: 24.04.86

(51) Int. Cl.⁴: **B 60 R 17/00**
F 16 N 27/00, F 16 N 7/30

(30) Priorität: 02.05.85 US 730006

(43) Veröffentlichungstag der Anmeldung:
05.11.86 Patentblatt 86/45

(84) Benannte Vertragsstaaten:
AT BE DE FR GB IT NL SE

(71) Anmelder: DEERE & COMPANY
1 John Deere Road
Moline Illinois 61265(US)

(72) Erfinder: Koltookian, Sarkis Aram
1218 Bauch Street
Waterloo Iowa 50701(US)

(74) Vertreter: Feldmann, Bernhard et al,
DEERE & COMPANY European Office, Patent
Department Steubenstrasse 36-42 Postfach 503
D-6800 Mannheim 1(DE)

(54) Steuersystem.

(57) Ein Steuersystem (18) für die Schmierung einer Kupplung (10), einer Bremse oder dergleichen ist mit einem Schmierventil (32) versehen, mittels dessen ein Schmiermittelfluß zu der Kupplung (10) gesteuert wird, wenn diese eingerückt wird. Auf diese Weise wird nur dann Schmiermittel der Kupplung zugeführt, wenn an ihr die höchste Wärmeentwicklung stattfindet. Die Steuerung des Schmierventils (32) erfolgt in Abhängigkeit eines Systemdruckes und eines von diesem abgeleiteten Druckes zum Betätigen der Kupplung (10).

EP 0 200 161 A2

Croydon Printing Company Ltd

./...

Fig. I

## Steuersystem

Die Erfindung betrifft ein Steuersystem für die Schmierung einer Kupplung oder einer sonstigen Kraftübertragungseinrichtung mit einer Schmiermittelquelle, einem Hauptkreis, der über einen Betätigungskreis auf die Kupplung wirkt, und mit einem Schmierventil zur Steuerung der Zufuhr von Schmiermittel von der Schmiermittelquelle zu der Kupplung, wobei das Schmierventil aus einem ersten Schmiermittel zu der Kupplung leitenden in einen zweiten Schmiermittel von der Kupplung fernhaltenden Zustand unter einer Zeitverzögerung bringbar ist.

Das bekannte Schmiersystem (ZA-A-84/8382) findet Anwendung bei einer Fahrkupplung und einer Zapfwellenkupplung und ist so ausgebildet, daß es der Fahrkupplung nur für die Zeitdauer Schmiermittel zukommen läßt, in der sie ausgerückt ist, während sie in ihrem eingerückten Zustand nicht mit Schmiermittel versorgt wird. Hingegen wird die Zapfwellenkupplung immer so lange geschmiert, als sie ausgerückt ist. Für ca. 20 - 30 Sekunden wird nach dem Einrücken der Fahrkupplung oder der Zapfwellenkupplung noch Schmiermittel der Fahrkupplung bzw. der Zapfwellenkupplung zugeführt. Um diese Zeitverzögerung zu erreichen, ist zur Betätigung des Ventils ein weiteres Ventil vorgesehen, das die Bewegung des Ventils steuert und selbst über einen Speicher betätigt wird, so daß es erst nach einer bestimmbaren Zeit reagiert und somit erst verzögert die Betätigung des Ventils hervorruft. Die Steuerung des Schmiermittelzuflusses zu der Zapfwellenkupplung erfolgt auf die gleiche Weise wie die Steuerung des Schmiermittelzuflusses zu der Fahrkupplung.

Der Nachteil dieses bekannten Schmiersystems liegt darin, daß zu viele Ventile, Leitungen und Speicher erforderlich sind, um die gewünschte Funktion zu erreichen. Außerdem wird ein Schmiermittelzufluß zu der Fahrkupplung nur in Abhängigkeit von dem Betätigungsdruck für diese gesteuert, so daß bei einem Schaden in dem Betätigungskreis für die Fahrkupplung auch die Schmierung ausfällt.

Die der Erfindung zugrunde liegende Aufgabe wird darin gesehen, ein Schmiersystem zu entwickeln, das im Aufbau einfacher und in der Funktion zuverlässiger ist.

Diese Aufgabe ist erfindungsgemäß dadurch gelöst worden, daß das Schmierventil ein Proportionalventilglied mit unterschiedlich großen Steuerflächen enthält, von denen eine von dem in dem Betätigungskreis herrschenden und die andere von dem in dem Hauptkreis herrschenden Druck beaufschlagt wird.

Auf diese Weise reicht ein einziges Ventil, nämlich das Schmierventil, zum Steuern des Schmiermittelflusses aus, das zudem so geschaltet werden kann, daß es bei einem Schadensfall im Betätigungskreis mittels des Druckes im Hauptkreis den Schmiermittelzufluß freigibt.

Durch die hervorragende Maßnahme gemäß Anspruch 2 wird erreicht, daß der Schmiermittelzufluß nur eine vorbestimmbare Zeitdauer anhält, wobei die Erfindung fortentwickelnde Merkmale zum Bestimmen der Zeitdauer den Ansprüchen 3, 6 und 7 zu entnehmen sind.

Die vorteilhafte Lehre gemäß den Ansprüchen 4, 5 und 12 führt auf einfache Weise hin zu einer hohen Funktionssicherheit des Schmierventils, weil u. a. mittels des jeweils höheren Druckes Reibkräfte des Proportionalventilglieds leichter zu überwinden sind und die unterschiedliche Größe der Steuerflächen ein unveränderliches Steuerkriterium bei stets gleichem Druck ist.

Durch die Verwirklichung der in den Ansprüchen 8 bis 11 jeweils für sich oder zusammen genannten Merkmale ergibt sich eine günstige Verbindung des erfindungsgemäßen Steuersystems mit anderen Systemen, so daß der Schmiermittelzufluß sowohl abhängig von anderen Gegebenheiten als auch für weitere Komponenten erfolgen kann.

In der Zeichnung ist ein nachfolgend näher beschriebenes Ausführungsbeispiel der Erfindung dargestellt. Es zeigt:

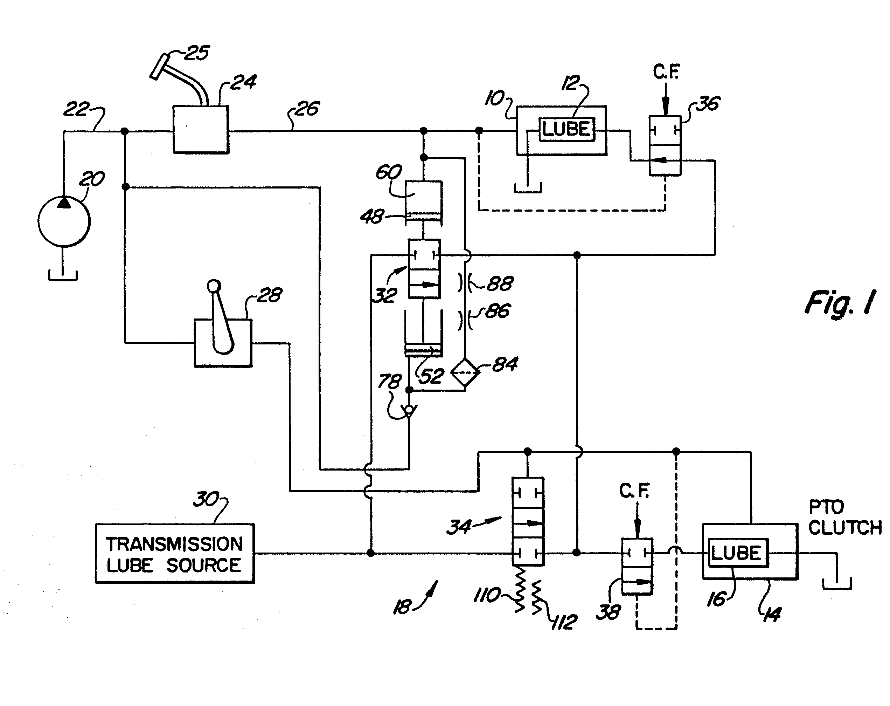

Figur 1    ein Steuersystem in schematischer Darstellung und mit einem Schmierventil und

Figur 2    das Schmierventil in gegenständlicher Darstellung und im Längsschnitt.

In einem herkömmlichen, jedoch nicht gezeigten Ackerschlepper mit einem Hydraulikkreislauf ist eine hydraulisch betätigte Kupplung 10, insbesondere eine Fahrkupplung, mit einem Schmierkreis 12, der auch als Kühlkreis wirkt, und eine ebenfalls hydraulisch betätigte zweite Kupplung 14, insbesondere eine Zapfwellenkupplung, mit einem Schmierkreis 16, der ebenfalls als Kühlkreis wirkt, vorgesehen. Die Kupplung 10 und die zweite Kupplung 14 sowie die ihnen zugeordneten Schmierkreise 12 und 16 werden über ein erfindungsgemäßes Steuersystem 18 betrieben.

Das Steuersystem 18 enthält eine Pumpe 20, die über einen Hauptkreis 22 einen Systemdruck an einem Steuerventil 24 anlegt, wobei das Steuerventil 24 mittels eines Pedals 25 betätigt wird und den aufgebauten Druck der Kupplung 10 über einen Betätigungskreis 26 zuführt.

Die Pumpe 20 baut auch einen Systemdruck in einem Steuerventil 28 auf, das den der zweiten Kupplung 14 zugeführten Betätigungsdruck steuert.

Das Steuersystem 18 ist ferner mit einer Schmiermittelquelle 30 ausgestattet, die Schmiermittel, insbesondere Schmieröl, den Schmierkreisen 12 und 16 über ein Schmierventil 32 für die Kupplung 10 und ein Reduzierventil 34 für
die zweite Kupplung 14 zuführt. Die Zufuhr von Schmiermittel zu den Schmierkreisen 12 und 16 erfolgt jedoch zudem
über Ventile 36 und 38, die durch den an der Kupplung 10
bzw. den an der zweiten Kupplung 14 anstehenden Druck geöffnet und über einen Fliehkraftregler geschlossen werden.

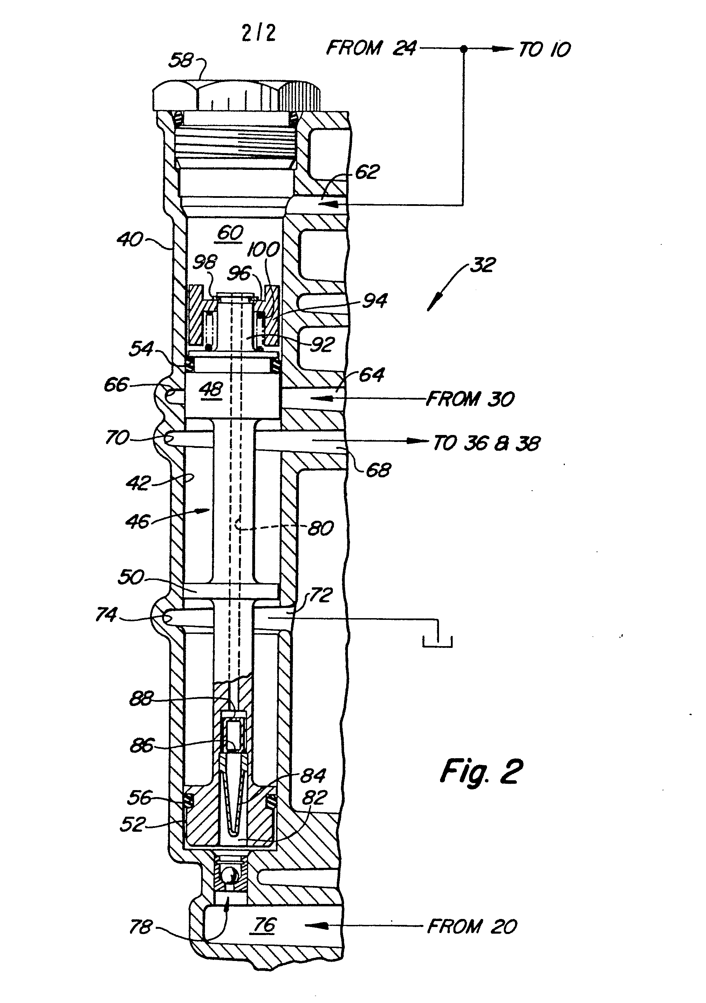

Der Aufbau des Schmierventils 32 ist am besten aus der
Figur 2 zu entnehmen. Es ist dort ersichtlich, daß das
Schmierventil 32 ein Gehäuse 40 mit einer nicht näher bezeichneten Ventilbohrung aufweist, wobei sich die Ventilbohrung in einen Bereich größeren Durchmessers 42 und in
einen Bereich kleineren Durchmessers 44 unterteilt und
sowohl gleitend wie auch dichtend ein hohles Proportionalventilglied 46 in sich aufnimmt. An dem Proportionalventilglied 46 sind Stege 48, 50 und 52 vorgesehen, wobei
in die Stege 48 und 52 jeweils eine Ringnut eingedreht
ist, in die O-Ringe 54 und 56 zu Dichtzwecken eingesetzt
sind. Die Stege 48 und 52 funktionieren als auf Druck ansprechende Auslöseeinrichtungen bzw. Steuerflächen und
weisen unterschiedlich große Durchmesser auf, wobei der
Steg 48 den größeren Durchmesser hat. Dementsprechend ist
auch die Zuordnung der Stege 48 und 52 zu den Bereichen
größeren und kleineren Durchmessers 42 und 44 gewählt.

Das eine Ende des Gehäuses 40 ist durch einen Stopfen 58
abgeschlossen, wodurch eine Pilotkammer 60 zwischen dem
Stopfen 58 und dem Proportionalventilglied 46 gebildet
wird, der der Betätigungsdruck für die Kupplung 10 von dem
Steuerventil 24 aus über eine Öffnung 62 zugeführt wird.
Eine Eingangsöffnung 64 und eine Nut 66 führen dem Bereich
größeren Durchmessers 42 der Ventilbohrung Schmiermittel
von der Schmiermittelquelle 30 aus zu. Eine Ausgangsöffnung 68 und eine Nut 70 verbinden den Bereich größeren
Durchmessers 42 der Ventilbohrung über die Ventile 36 und
38 mit den Schmierkreisen 12 und 16. Schließlich verbinden eine Auslaßöffnung 72 und eine Nut 74 die Bereiche größeren und kleineren Durchmessers 42 und 44 mit einem Sammelbehälter.

Das andere Ende der Ventilbohrung unterliegt in ihrem Bereich kleineren Durchmessers 44 dem im Hauptkreis 22 herrschenden Systemdruck, der ihr von der Pumpe 20 aufgebaut über eine Öffnung 76 und ein Rückschlagventil 78 zugeführt wird. Durch das Proportionalventilglied 46 erstreckt sich axial eine Bohrung 80, in die ein Sieb 84 und zwei Drosseln 86 und 88 oder Blenden eingesetzt sind. Demgemäß handelt es sich bei dem Schmierventil 32 um ein normalerweise geschlossenes Zweistellungsventil, das zum einen durch den an der Kupplung 10 anstehenden und auf den Steg 48 wirkenden Betätigungsdruck und zum anderen durch den im Hauptkreis 22 herrschenden Systemdruck, der auf den Steg 52 wirkt, gesteuert wird.

Ein Stößel 92 erstreckt sich über den Steg 48 hinaus in Richtung auf den Stopfen 58. Auf dem Stößel 92 ist gleitend ein hohles, zylindrisches Element, also eine Hülse 94, über einen Kragen 96 gelagert, der im Innern offen ist und den Stößel 92 umgreift. Ein Sicherungsring oder Anschlag 98 hält die Hülse 94 auf dem Stößel 92 axial fest. Die Hülse 94 wird mittels einer Feder 100 gegen den Anschlag 98 gedrückt, wobei zwischen der Hülse 94 und dem Steg 48 ein Abstand von ca. 3 mm verbleibt. Die Hülse 94 steht über den Stößel 92 vor, so daß dann, wenn das Proportionalventilglied 46 in Richtung auf den Stopfen 58 zubewegt wird, zuerst die Hülse 94 an dem Stopfen 58 anschlägt und daraufhin die Hülse 94 von dem Anschlag 98 wegbewegt wird, so daß die Feder 100 zusammengedrückt wird, bis die Hülse 94 an dem Steg 48 anschlägt.

Normalerweise ist der von dem Steuerventil 24 ausgehende Druck hoch, die Kupplung 10 eingerückt und das Schmierventil 32 befindet sich in seiner geschlossenen Stellung, wie dies in der Zeichnung dargestellt ist, und kein Schmiermittel fließt zu den Schmierkreisen 12 oder 16. Dies ergibt
sich daraus, daß der Druck in der Pilotkammer 60 auf den
Steg 48 mit der größeren Querschnittsfläche wirkt, während
die kleinere Querschnittsfläche des Steges 52 von dem seitens der Pumpe 20 aufgebauten Systemdruck beaufschlagt
wird.

Sobald das Pedal 25 niedergetreten wird, verringert sich
der Druck hinter dem Steuerventil 24 und somit in der Pilotkammer 60, und die Kupplung 10 ist ausgerückt. Währenddessen beaufschlagt der Systemdruck die kleinere Querschnittsfläche von Steg 52 über das Rückschlagventil 78,
um das Proportionalventilglied 46 mit Blick auf Figur 2
nach oben zu bewegen. Gegebenenfalls wird durch die Aufwärtsbewegung die Hülse 94 an dem Stopfen 58 zur Anlage
gebracht, so daß sie sich von dem Anschlag 98 abhebt und
die Feder 100 zusammengedrückt wird, bis der Steg 48 an
das in Figur 2 untere Ende der Hülse 94 anschlägt. In dieser Stellung, die die offene Stellung des Schmierventils
32 darstellt, kann Schmiermittel ungedrosselt zu den Ventilen 36 und 38 fließen, die bereits bei einem teilweisen
Einrücken der Kupplung 10 oder der zweiten Kupplung 14
öffnen. Dieser uneingeschränkte Schmiermittelfluß hält so
lange an, als das Pedal 25 nicht vollkommen niedergedrückt
oder die zweite Kupplung 14 eingerückt ist.

In dieser Stellung, in der das Proportionalventilglied 46
vollkommen nach oben bewegt worden ist, übt die zusammengedrückte Feder 100 eine nach unten gerichtete Kraft auf
das Proportionalventilglied 46 aus, und zwar jeweils mit
Blick auf Figur 2. Sobald das Pedal 25 losgelassen wird,
um die Kupplung 10 erneut einzurücken, steht in der Pilotkammer 60 wiederum der Betätigungsdruck der Kupplung 10
an, der in der Regel dem Systemdruck entspricht. Die nach
unten gerichtete, von der Feder 100 ausgehende Kraft trägt
dann zur Überwindung der anfänglichen Haftreibung zwischen den O-Ringen 54 und 56 und den Wandungen der Ventilbohrung im Bereich des größeren und des kleineren Durchmessers 42 und 44 bei, so daß das Proportionalventilglied 46 sofort eine Bewegung nach unten und zurück zu der anfänglichen und in Figur 2 gezeigten Position beginnen kann. Dieses vorzügliche Merkmal hilft zu vermeiden, daß das Proportionalventilglied 46 in Situationen hoher Reibung, etwa bei geringen Temperaturen, in der Ventilbohrung festhängt.

Wenn sich in der Pilotkammer 60 der Systemdruck aufgebaut hat, wird das Proportionalventilglied 46 mit Blick auf Figur 2 nach unten bewegt, und zwar aufgrund der Flächendifferenz zwischen dem oberen Steg 48 und dem unteren Steg 52. Diese nach unten gerichtete Bewegung bedingt, daß sich der Steg 52 entgegen dem Systemdruck bewegt, so daß Schmiermittel durch das Sieb 84 und die Drosseln 86 und 88 gedrängt wird. Die Drosseln 86 und 88 führen dazu, daß die Abwärtsbewegung langsam verläuft, weshalb das Schmierventil 32 erst nach einer vorbestimmbaren Zeit seine geschlossene Stellung einnimmt und daher als Kupplungsschmierreduktionsverzögerungsventil bezeichnet werden könnte. Demgemäß hält der Schmiermittelfluß auch noch für eine bestimmte Zeit nach dem erneuten Einrücken der Kupplung 10 an, so lange nämlich, bis das Schmierventil 32 seine geschlossene Stellung eingenommen hat. Die Querschnittsflächen der Stege 48 und 52 wie auch die Größe der Drosseln 86 und 88 können verändert werden, um die Verzögerungszeit, also die Zeit, in der die Schmierung noch nach dem Wiedereinrücken der Kupplung 10 anhält, zu bestimmen.

Dieses Merkmal der Verzögerung ist deshalb von großem Vorteil, weil es eine zusätzliche Schmierung zwischen häufigen Schaltwechseln der Kupplung 10 besorgt und somit deren Beschädigung infolge zu hoher Wärmeentwicklung vorgebeugt wird. Jedoch erhöht die Beendigung des Schmiervorgangs nach dem Einrücken der Kupplung 10 unter normalen Verhältnissen die Wirtschaftlichkeit des Steuersystems 18 wie auch die der Kupplung 10. Überdies sorgt dieses Steuersystem 18 im Falle eines Schadens an dem Betätigungskreis 26 zum Einrücken der Kupplung 10 dafür, daß der Systemdruck das Schmierventil 32 in seine offene Stellung drängt, so daß dann die Schmierung einsetzt und die gegebenenfalls durchrutschende Kupplung 10 gekühlt und geschmiert wird.

Durch die Möglichkeit, den Schmiermittelfluß zu der zweiten Kupplung 14 zu unterbrechen, ergibt sich eine Verringerung eines schädlichen Bewegungswiderstandes an der zweiten Kupplung 14 durch das Schmiermittel.

Das Reduzierventil 34 ist ein Dreistellungsventil (geschlossen-offen-geschlossen), das durch eine Feder 110 in eine seiner geschlossenen Stellungen gebracht wird, wenn der Betätigungsdruck für die zweite Kupplung 14 von der Pumpe 20 über das Steuerventil 28 kommend gering ist, so wie dies der Fall ist, wenn die zweite Kupplung 14 nicht eingerückt ist. Wenn der Druck hinter dem Steuerventil 28 ansteigt, um die zweite Kupplung 14 einzurücken, dann wird mittels dieses Druckes das Reduzierventil 34 in seine mittlere Stellung bewegt, wodurch Schmiermittel von der Schmiermittelquelle 30 aus zu den Schmierkreisen 12 und 16 über die Ventile 34, 36 und 38 geleitet wird. Eine Feder 112 dient dazu, der von der mittleren, offenen Stellung des Reduzierventils 34 weggerichteten Bewegung des Reduzierventils 34, aufgrund des von der Pumpe 20 gelieferten hohen Druckes, einen Widerstand zu bieten.

## <u>Patentansprüche</u>

1.  Steuersystem (18) für die Schmierung einer Kupplung (10) oder einer sonstigen Kraftübertragungseinrichtung mit einer Schmiermittelquelle (30), einem Hauptkreis (22), der über einen Betätigungskreis (26) auf die Kupplung (10) wirkt, und mit einem Schmierventil (32) zur Steuerung der Zufuhr von Schmiermittel von der Schmiermittelquelle (30) zu der Kupplung (10), wobei das Schmierventil (32) aus einem ersten Schmiermittel zu der Kupplung (10) leitenden in einen zweiten Schmiermittel von der Kupplung (10) fernhaltenden Zustand unter einer Zeitverzögerung bringbar ist, dadurch gekennzeichnet, daß das Schmierventil (32) ein Proportionalventilglied (46) mit unterschiedlich großen Steuerflächen enthält, von denen eine von dem in dem Betätigungskreis (26) herrschenden und die andere von dem in dem Hauptkreis (22) herrschenden Druck beaufschlagt wird.

2.  Steuersystem nach Anspruch 1, dadurch gekennzeichnet, daß das Proportionalventilglied (46) entgegen einem Widerstand aus einer ersten Stellung in eine zweite Stellung bringbar ist.

3.  Steuersystem nach Anspruch 2, dadurch gekennzeichnet, daß der Widerstand ein Strömungswiderstand ist, der durch eine Drosselung eines beim Betätigen des Proportionalventilglieds (46) zu verdrängenden Volumens aufgebaut wird.

4.  Steuersystem nach Anspruch 1, dadurch gekennzeichnet, daß die beiden Steuerflächen miteinander ständig in Verbindung stehen.

5.  Steuersystem nach Anspruch 4, dadurch gekennzeichnet, daß die beiden Steuerflächen dem jeweils höheren Druck von dem Betätigungsdruck oder dem Systemdruck unterliegen.

6. Steuersystem nach Anspruch 4 oder 5, dadurch gekennzeichnet, daß in der Verbindung zwischen den Steuerflächen zumindest eine Drossel (86, 88) vorgesehen ist.

7. Steuersystem nach Anspruch 5, dadurch gekennzeichnet, daß sich zwischen der Verbindung der beiden Steuerflächen und dem Hauptkreis (22) ein in Richtung auf das Schmierventil (32) öffnendes Rückschlagventil (78) befindet.

8. Steuersystem nach Anspruch 1, wobei eine zweite Kupplung (14) vorgesehen ist, dadurch gekennzeichnet, daß die Zufuhr des Schmiermittels zu der zweiten Kupplung (14) über ein Ventil (34) gewährleistet wird, wenn die zweite Kupplung (14) eingerückt ist, und daß bei eingerückter zweiter Kupplung (14) stets auch Schmiermittel der Kupplung (10), unabhängig davon, ob sich diese im durchtriebslosen oder durchtreibenden Zustand befindet, zugeführt wird.

9. Steuersystem nach Anspruch 1, dadurch gekennzeichnet, daß zwischen dem Schmierventil (32) und der Kupplung (10) ein weiteres Ventil (36) vorgesehen ist, das die Zufuhr des Schmiermittels zu der Kupplung (10) steuert.

10. Steuersystem nach Anspruch 8 und 9, dadurch gekennzeichnet, daß die Ventile (36, 38) mittels des Betätigungsdrucks der Kupplung (10) bzw. der zweiten Kupplung (14) in ihre offene Stellung und mittels eines Fliehkraftreglers in ihre geschlossene Stellung bringbar sind.

11. Steuersystem nach Anspruch 10, dadurch gekennzeichnet, daß die Fliehkraftregler abhängig von einer Umdrehungszahl der Kupplung (10) bzw. der zweiten Kupplung (14) wirken.

12. Steuersystem nach Anspruch 1, dadurch gekennzeichnet, daß die größere Steuerfläche des Proportionalventilglieds (46) mit dem Betätigungskreis (26) und dessen kleinere Steuerfläche mit dem Hauptkreis (22) in Verbindung steht.

Fig. 1

2/2

FROM 24 → TO 10

FROM 30

TO 36 & 38

FROM 20

Fig. 2